# EUROPÄISCHE PATENTSCHRIFT

(11) **EP 1 145 877 B1**
(45) Veröffentlichungstag und Bekanntmachung des Hinweises auf die Patenterteilung: **21.05.2008**
(21) Anmeldenummer: 01106489.6
(22) Anmeldetag: 26.03.2001
(51) Int. Cl.: B60G 3/20, B60G 7/00

(54) **Radaufhängung**
Wheel suspension
Suspension de roue

(30) Priorität: 15.04.2000 DE 10018764
(43) Veröffentlichungstag der Anmeldung: 17.10.2001
(73) Patentinhaber: Volkswagen Aktiengesellschaft, 38436 Wolfsburg (DE)
(72) Erfinder: Hinze, Thilo, 38170 Kneitlingen / Ampleben (DE)

(56) Entgegenhaltungen:
- EP-A- 0 378 219
- WO-A-95/12499
- DE-A- 4 412 101

## Beschreibung

Die Erfindung bezieht sich auf eine Vierlenker-Radaufhängung für ein Hinterrad eines Kraftfahrzeugs nach dem Oberbegriff des Anspruchs 1.

Eine derartige Vierlenker-Radaufhängung ist aus der DE 44 12 101 A1 bekannt. Die bekannte Radaufhängung weist einen Längslenker auf, der sich in Richtung der Fahrzeuglängsrichtung erstreckt und drei Querlenker, die sich weitgehend in Richtung der Fahrzeugquerachse erstrecken. Bei einer solchen bekannten Radaufhängung bilden die beiden unteren Querlenker eine Belastungsebene und im Abstand hierzu verläuft der obere Querlenker. Bei einer solchen bekannten Radaufhängung ist der obere Querlenker gekröpft ausgebildet, so dass er um eine Federbein herum verläuft.

Ferner ist ein gekröpfter oberer Querlenker bekannt, der unter einem Längsträger der Karosserie eines Kraftfahrzeugs hindurch verläuft und innerhalb eines. Längsträgers beispielsweise in einem Gummilager gelagert ist. Eine solche bekannte Radaufhängung führt beim Einfedern und Ausfedern der an der Karosserie angelenkten Radaufhängung zu einem Nulldurchgang des Sturzwinkels und damit zu einer Spurweitenveränderung zwischen den beiden Hinterrädern des Fahrzeugs. Aufgrund der damit verbundenen Verschiebungen des jeweiligen Radaufstandpunktes kommt es zu einem negativen Einfluss auf die Geradeausfahreigenschaften des Fahrzeugs.

Weitere Radaufhängungen sind aus der WO 95/12499 und der EP 0 378 219 A1 bekannt.

Ausgehend hiervon liegt der vorliegenden Erfindung die Aufgabe zugrunde, die bekannte Radaufhängung derart , weiterzubilden, dass das Fahrzeug verbesserte Geradeausfahreigenschaften besitzt.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Nach der Erfindung ist nunmehr eine Radaufhängung für ein Hinterrad eines Kraftfahrzeugs vorgesehen mit einem sich weitgehend in Fahrzeuglängsrichtung erstreckenden Längslenker und drei sich weitgehend quer zur Fahrzeuglängsrichtung erstreckenden Querlenkern, von denen zwei in einer unteren Ebene angeordnet sind und einer in einer oberen Ebene im Abstand dazu angeordnet ist und die Querlenker an einem gemeinsamen Radträger angelenkt sind, und der obere Querlenker der kürzeste der drei Querlenker ist.

Diese kurze Ausbildung des oberen Querlenkers führt dazu, daß sich beim Betrieb des damit ausgestatteten Kraftfahrzeugs sowohl beim Einfedern als auch beim Ausfedern der Radaufhängung ein negativer Sturzwinkel einstellt und dies zu deutlich geringeren Spurweitenveränderungen als bei einem mit der bekannten Radaufhängung ausgestatteten Fahrzeug kommt.

Nach der Erfindung ist es vorgesehen, daß der obere Querlenker eine solche Länge aufweist, daß sein karosserieseitiger Anlenkpunkt in Fahrzeuglängsrichtung betrachtet außerhalb eines Längsträgers des Fahrzeugs angeordnet ist. Dies ermöglicht eine Ausbildung des oberen Querlenkers als gerade Stange, was die Fertigungskosten deutlich verringert.

Die Erfindung wird im Folgenden anhand der Zeichnung näher erläutert. Diese zeigt in:
Fig. 1 in einer perspektivischen Darstellung eine Radaufhängung nach der Erfindung gemäß einer ersten Ausführungsform ; und
Fig. 2 gemäß einer zweiten - nicht erfindungsgemäßen - Ausführungsform;
Fig. 3A eine Darstellung des Sturzwinkels beim Einfedern und Ausfedern der Radaufhängung im Vergleich zum Sturzwinkel einer bekannten Radaufhängung; und
Fig. 3B eine Darstellung der Spurweitenveränderung beim Einfedern und Ausfedern der Radaufhängung im Vergleich zu einer bekannten Radaufhängung.

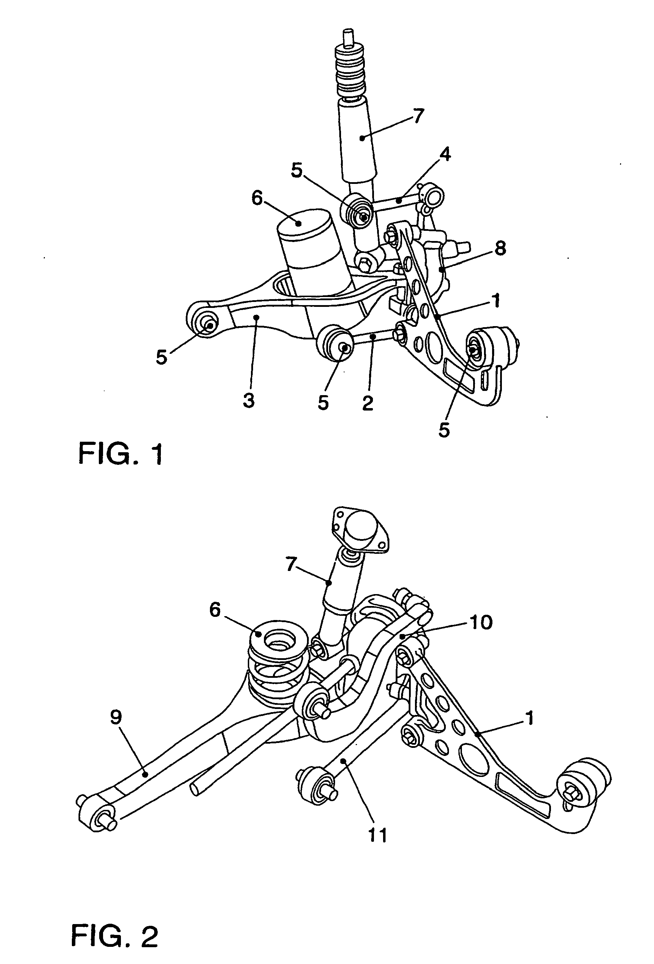

Die in Fig. 1 der Zeichnung dargestellte erste Ausführungsform der erfindungsgemäßen Radaufhängung weist einen Längslenker 1, einen unteren kurzen Querlenker 2 und einen unteren langen Querlenker 3 sowie einen als gerade Stange ausgebildeten oberen Querlenker 4 auf.

Der obere Querlenker 4 ist dabei der kürzeste der drei Querlenker der dargestellten Radaufhängung. Der Längslenker 1 sowie die drei Querlenker 2, 3, 4 besitzen jeweils einen Anlenkpunkt 5, über den der jeweiligen Lenker beispielsweise in einem Gummilager an der Karosserie gelenkig befestigt werden kann.

Über den jeweiligen Anlenkpunkten 5 gegenüberliegende Anlenkpunkte sind der Längslenker 1 und die Querlenker an einem Radträger 8 angeordnet.

Eine schematisch dargestellte Feder 6 und ein Stoßdämpfer 7 stellen ein Federdämpfer System dar.

Die in Fig. 2 der Zeichnung dargestellte Radaufhängung unterscheidet sich von der Radaufhängung gemäß Fig. 1 dadurch, daß alle Querlenker länger ausgebildet sind als die entsprechenden nach Fig. 1 und es dadurch zu geringeren Querverschiebungen der Radaufstandpunkte kommt. Zudem ist der obere Querträger 10 gekröpft ausgebildet, ist aber immer noch der kürzeste der drei Querlenker. Es ist dabei festzustellen, daß bei beiden Ausführungsformen die dem Radträger gegenüberliegenden Anlenkpunkte des Längslenkers 1, des unteren kürzeren Querlenkers 2 und 11 und des unteren längeren Querlenkers 3 und 9 auf weitgehend einer Geraden liegen, so daß hierdurch die geometrischen Verhältnisse zwischen den beiden unteren Querlenkern festgelegt werden können.

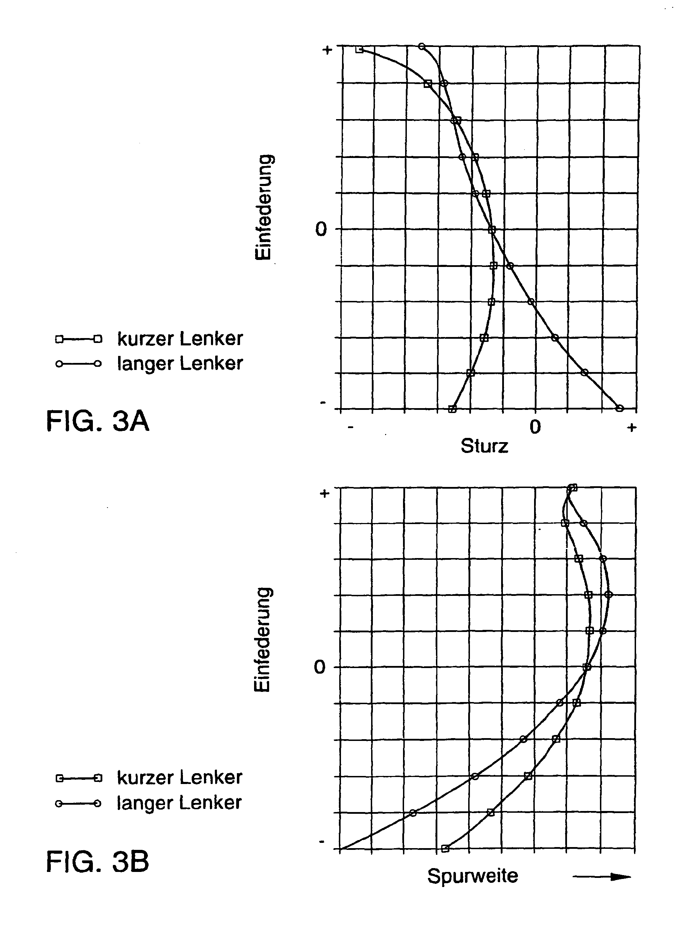

Fig. 3A zeigt nun eine Darstellung des Sturzwinkels beim Einfedern und Ausfedern der Radaufhängung nach der Erfindung im Vergleich zum Sturzwinkel einer bekannten Radaufhängung und Fig. 3B eine entsprechende Darstellung der Spurweitenveränderung beim Einfedern und Ausfedern der Radaufhängung im Vergleich zu einer bekannten Radaufhängung.

Wie es ohne weiteres anhand von Fig. 3A ersichtlich ist, bleibt der Sturzwinkel der Radaufhängung nach der Erfindung, also mit einem kurzen Lenker, während des gesamten Federbereichs ein Einfedern und beim Ausfedern negativ, während sich der Sturzwinkel der bekannten Radaufhängung mit einem langen oberen Querlenker vom negativen zum positiven Bereich ändert und sich somit insbesondere beim Ausfedern eine negative Spurweitenveränderung ergibt, was zu schlechten Geradeausfahreigenschaften führt. Fig. 3 B der Zeichnung zeigt nun den soeben geschilderten Zusammenhang anhand einer Darstellung der Spurweitenveränderung. Diese bleibt bei der Radaufhängung nach der Erfindung mit dem kurzen Querlenker über den gesamten Federbereich deutlich kleiner als bei der bekannten Radaufhängung mit dem langen Querlenker, so daß die Vorteile der Radaufhängung nach der Erfindung nunmehr deutlich sind.

Die Radaufhängung zeichnet sich auch dadurch aus, daß die karosserieseitigen Anlenkpunkte der drei Querlenker innerhalb eines dem Felgenschüsseldurchmesser entsprechenden Umkreis bei einer weitgehend horizontal verlaufenden von den beiden unteren Querlenker aufgespannten Ebene angeordnet sind, so daß eine ausgesprochen kompakte Anordnung der Anlenkpunkte möglich ist.

Hinsichtlich weiterer Merkmale und Vorteile der vorliegenden Erfindung wird im übrigen ausdrücklich auf die Patentansprüche und die Zeichnungen verwiesen.

### BEZUGSZEICHENLISTE

- 1: Längslenker
- 2: Querlenker
- 3: Querlenker
- 4: Querlenker
- 5: Anlenkpunkt
- 6: Feder
- 7: Stoßdämpfer
- 8: Radträger
- 9: Querlenker
- 10: Querlenker
- 11: Querlenker

## Patentansprüche

1. Vierlenker-Radaufhängung für ein Hinterrad eines Kraftfahrzeugs mit einem sich weitgehend in Fahrzeuglängsrichtung erstreckenden Längslenker (1) und drei sich weitgehend quer zur Fahrzeuglängsrichtung erstreckenden Querlenkern, von denen zwei (2, 3; 9, 11) in einer unteren Ebene angeordnet sind und einer (4; 10) in einer oberen Ebene im Abstand dazu angeordnet ist und die Querlenker an einem gemeinsamen Radträger (8) angelenkt sind, wobei der obere Querlenker (4; 10) der kürzeste der drei Querlenker ist, **dadurch gekennzeichnet, dass** der Längslenker (1) über zwei Anlenkpunkte am Radträger (1) angeordnet ist,
die unteren Querlenker durch einen kürzeren Querlenker (2; 11) und einen längeren Querlenker (3; 9) gebildet werden, wobei die dem Radträger (8) gegenüberliegenden Anlenkpunkte des Längsträgers (1), des unteren kürzeren Querlenkers (2; 11) und des unteren längeren Querlenkers (3; 9) auf weitgehend einer Geraden liegen, und
der obere Querlenker (4) als gerade Stange ausgebildet ist.

2. Radaufhängung nach Anspruch 1, **dadurch gekennzeichnet, dass** der obere Querlenker (4; 10) eine solche Länge aufweist, dass sein karosserieseitiger Anlenkpunkt (5) in Fahrzeuglängsrichtung betrachtet ausserhalb eines Längsträgers des Fahrzeugs angeordnet ist.

3. Radaufhängung nach Anspruche 1 oder 2, **dadurch gekennzeichnet, dass** das Verhältnis der Längen der drei Querlenker so ist, dass sich sowohl beim Einfedern als auch beim Ausfedern der an der Karosserie des Fahrzeugs angeordneten Radaufhängung ein negativer Sturzwinkel einstellt.

4. Radaufhängung nach einem der Ansprüche 1 bis 3, **dadurch gekennzeichnet, dass** die karosserieseitigen Anlenkpunkte der drei Querlenker innerhalb eines dem Felgenschüsseldurchmesser entsprechenden Umkreis bei einer weitgehend horizontal verlaufenden von den beiden unteren Querlenker aufgespannten Ebene angeordnet sind.

5. Radaufhängung nach einem der Ansprüche 1 bis 4, **dadurch gekennzeichnet, dass** alle Querlenkeranbindungen am Radträger (8) innerhalb der Felgenschüssel liegen.

## Claims

1. Four-link wheel suspension for a rear wheel of a motor vehicle, with a longitudinal link (1) extending largely in the longitudinal direction of the vehicle and three transverse links which extend largely transversely with respect to the longitudinal direction of the vehicle and of which two (2, 3; 9, 11) are arranged in a lower plane and one (4; 10) is arranged at a distance thereto in an upper plane, and the transverse links are coupled to a common wheel carrier (8), with the upper transverse link (4; 10) being the shortest of the three transverse links, **characterized in that** the longitudinal link (1) is arranged on the wheel carrier (1) via two coupling points, the lower transverse links are formed by a shorter transverse link (2; 11) and a longer transverse link (3; 9), with the coupling points of the longitudinal link (1), of the lower, shorter transverse link (2; 11) and of the lower, longer transverse link (3; 9), which coupling points lie opposite the wheel carrier (8), lying largely on a straight line, and the upper transverse link (4) being designed as a rectilinear rod.

2. Wheel suspension according to Claim 1, **characterized in that** the upper transverse link (4; 10) has such a length that its vehicle-body-side coupling point (5) is arranged outside a longitudinal member of the vehicle, as viewed in the longitudinal direction of the vehicle.

3. Wheel suspension according to Claim 1 or 2, **characterized in that** the ratio of the lengths of the three transverse links is such that a negative camber angle arises both during the compression and during the rebound of the wheel suspension arranged on the vehicle body.

4. Wheel suspension according to one of Claims 1 to 3, **characterized in that** the vehicle-body-side coupling points of the three transverse links are arranged within a circumscribed circle, which corresponds to the diameter of the rim bowl, in a plane which largely runs horizontally and is defined by the two lower transverse links.

5. Wheel suspension according to one of Claims 1 to 4, **characterized in that** all of the transverse link connections to the wheel carrier (8) lie within the rim bowl.

## Revendications

1. Suspension de roue à quatre bras pour une roue arrière d'un véhicule automobile, comprenant un bras longitudinal (1) s'étendant essentiellement dans la direction longitudinale du véhicule et trois bras transversaux s'étendant essentiellement transversalement à la direction longitudinale du véhicule, dont deux (2, 3 ; 9, 11) sont disposés dans un plan inférieur et un (4 ; 10) est disposé dans un plan supérieur à distance de ceux-ci, les bras transversaux étant articulés sur un support de roue commun (8), le bras transversal supérieur (4 ; 10) étant le plus court des trois bras transversaux, **caractérisée en ce que** le bras longitudinal (1) est disposé sur le support de roue (8) par le biais de deux points d'articulation, les bras transversaux inférieurs sont formés par un bras transversal plus court (2 ; 11) et un bras transversal plus long (3 ; 9), les points d'articulation du bras longitudinal (1) opposés au support de roue (8), du bras transversal inférieur plus court (2 ; 11) et du bras transversal inférieur plus long (3 ; 9) étant situés sensiblement sur une droite, et le bras transversal supérieur (4) étant réalisé sous forme de tige droite.

2. Suspension de roue selon la revendication 1, **caractérisée en ce que** le bras transversal supérieur (4 ; 10) présente une longueur telle que son point d'articulation (5) du côté de la carrosserie, considéré dans la direction longitudinale du véhicule, soit disposé en dehors d'un support longitudinal du véhicule.

3. Suspension de roue selon la revendication 1 ou 2, **caractérisée en ce que** le rapport des longueurs des trois bras transversaux est tel qu'un angle de piqué négatif s'ajuste à la fois lors de la compression et de la détente de la suspension de roue disposée sur la carrosserie du véhicule.

4. Suspension de roue selon l'une quelconque des revendications 1 à 3, **caractérisée en ce que** les points d'articulation, du côté de la carrosserie, des trois bras transversaux, sont disposés à l'intérieur d'un cercle correspondant au diamètre du disque de la jante, dans le cas d'un plan s'étendant essentiellement horizontalement et tendu par les deux bras transversaux inférieurs.

5. Suspension de roue selon l'une quelconque des revendications 1 à 4, **caractérisée en ce que** toutes les liaisons des bras transversaux sont situées sur le support de roue (8) à l'intérieur du disque de la jante.
